# EUROPÄISCHE PATENTANMELDUNG

(11) **EP 1 571 360 A1**
(43) Veröffentlichungstag der Anmeldung: **07.09.2005**
(21) Anmeldenummer: 05004673.9
(22) Anmeldetag: 03.03.2005
(51) Int. Cl.: F16D 23/02, F16D 69/04

(54) **Verfahren zur Herstellung eines Konusringes**

(30) Priorität: 03.03.2004 DE 102004010342
(71) Anmelder: HOERBIGER Antriebstechnik GmbH, 86952 Schongau (DE)
(72) Erfinder: Back, Ottmar, 82362 Weilheim (DE)
(74) Vertreter: Schmitz, Hans-Werner

(57) **Zusammenfassung**

Die Erfindung betrifft ein Verfahren zur Herstellung eines Konusringes 1 mit folgenden Verfahrensschritten:
- Zuschneiden eines planen Trägerringes 2 aus Metall;
- Aufbringen einer plastisch verformbaren Zwischenschicht 3;
- Aufbringen eines organischen Reibbelages 4, 5 auf die Zwischenschicht; und
- Umformen des mit der Zwischenschicht 3 und dem Reibbelag 4, 5 versehenen planen Trägerrings 2 in eine konische Form.

## Beschreibung

Die Erfindung betrifft ein Verfahren zur Herstellung eines Konusringes gemäß Anspruch 1 sowie einen durch dieses Verfahren hergestellten Konusring.

Synchronisierungen in Schaltgetrieben werden zur Steigerung der Leistungsfähigkeit als Mehrfach-Konussynchronisierungen ausgeführt. Der Reibbelag kann dabei für eine Doppel-Konussynchronisierung jeweils am Innenkonus von Außenring und Zwischenring oder am Innenkonus von Außenring und Außenkonus vom Innenring oder am Außen- und Innenkonus vom Zwischenring angeordnet sein.

Eine wirtschaftlich vorteilhafte Lösung stellt die Anordnung des Reibbelages nur am Zwischenring dar.

Aus der DE 3609879 C2 ist es bekannt, Zwischenringe mit Streusinterbelägen zu versehen, die umformtechnisch ohne spanende Bearbeitung erzeugt werden.

Ferner sind Zwischenringe mit organischen Belägen, wie z.B. aus Karbon, bekannt, bei denen der Belag auf den zuvor in eine Konusform umgeformten Trägerring geklebt wird. Die Vorbehandlung der Klebeflächen erfordert hierbei in der Regel eine spanende Bearbeitung der Konusflächen des Trägerrings. Dies ist jedoch aufwendig und kostenintensiv.

Es ist demgegenüber Aufgabe der vorliegenden Erfindung, ein kostengünstiges Verfahren zur Herstellung eines Konusringes mit organischem Reibbelag zu schaffen, das es darüber hinaus ermöglicht, ein Lösen des Reibbelages während der Verarbeitung zu verhindern.

Die Lösung dieser Aufgabe erfolgt durch die Merkmale des Anspruches 1.

Erfindungsgemäß wird ein Verfahren geschaffen, bei dem zunächst ein planer Trägerring aus Metall zugeschnitten, insbesondere gestanzt wird.

Auf zumindest eine in aller Regel jedoch beide Flächen dieses planen Trägerringes wird zunächst eine plastisch verformbare Zwischenschicht aufgebracht.

Danach wird auf diese Zwischenschicht der organische Reibbelag aufgebracht und anschließend wird der so vorbereitete plane Trägerring in eine konische Form umgeformt.

Dadurch wird erreicht, dass die Klebeverbindung zwischen dem planen Trägerteil und dem Reibbelag durch die aufgebrachte Zwischen- oder Verbindungsschicht verformbar ausgestaltet wird.

Ein besonderer Vorteil besteht bei dem erfindungsgemäßen Verfahren darin, dass der noch in seiner planen Form befindliche Trägerring mit dem organischen Reibbelag, beispielsweise durch eine Verklebung, versehen werden kann.

Durch die plastisch verformbare Zwischen- bzw. Verbindungsschicht wird eine Bindestruktur erzeugt, die die Umformung des beklebten planen Trägerrings in einen Konusring zulässt, ohne dass die Klebeverbindung zerstört wird.

Die unter Umständen durch Einschnürungen entstehenden Dickenschwankungen des Trägerringes können vorzugsweise in einem Kalibrierungsprozess ausgeglichen.werden. Die plastisch verformbare Zwischenschicht gleicht die Dickenschwankungen praktisch völlig aus, so dass auf den Kalibrierungsprozess in aller Regel verzichtet werden kann.

Die Unteransprüche haben vorteilhafte Weiterbildung der Erfindung zum Inhalt.

Vorzugsweise besteht die Zwischenschicht aus einem aufgesinterten Material, das eine poröse Oberfläche erzeugt und metallisch mit dem Planteil verbunden ist. Der Kleber dringt hierbei in die poröse Oberfläche ein und es entsteht eine plastisch verformbare Bindestruktur, die die bei der Umformung auftretenden Dehnungen und Stauchungen zulässt.

Vorzugsweise kann diese Oberfläche durch Aufspritzen einer Schicht erzeugt werden.

Im Prinzip ist es möglich, dass die Zwischenschicht aus einer Klebeschicht aufgebaut wird, die aus einem speziellen Kleber aus elastomerhaltigem Phenolharz besteht.

Ferner ist es möglich, die zuvor bereits erläuterte Sinterschicht als Zwischenschicht vorzusehen, auf die der Kleber und der Belag aufgebracht werden.

Die genannte Zwischenschicht bzw. deren Oberfläche kann durch Aufspritzen einer Schicht erzeugt werden.

Vorteilhafterweise ist es möglich, die Oberfläche der Zwischenschicht durch Strahlen aufzurauhen.

Ferner ist es ebenfalls möglich, in der Oberfläche durch Prägen Riefen oder Nuten zu erzeugen.

Schließlich ist es auch möglich, die Oberfläche durch eine spanende Bearbeitung zusätzlich aufzurauhen.

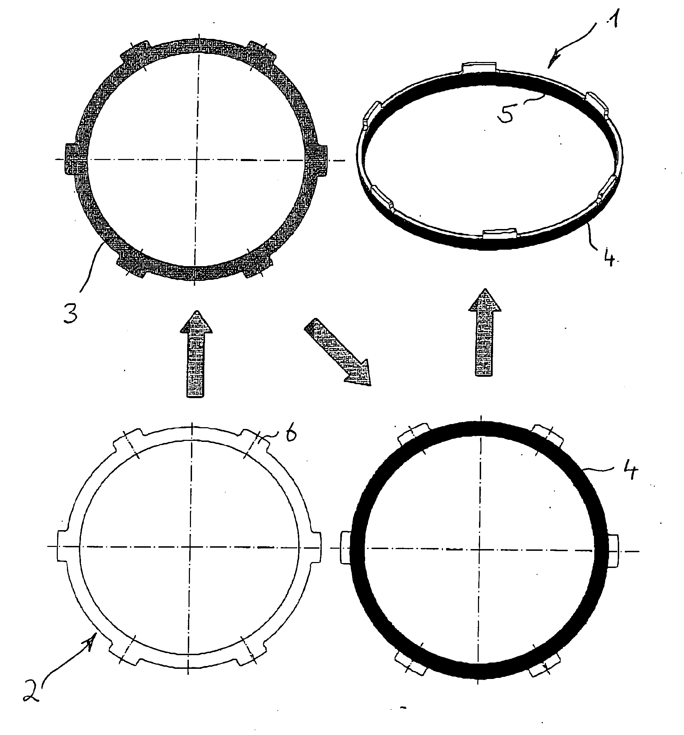

Nachfolgend wird ein Ausführungsbeispiel des erfindungsgemäßen Verfahrens anhand der einzigen Figur der Zeichnung näher erläutert.

Gemäß den Prinzipien des erfindungsgemäßen Verfahrens zur Herstellung eines Konusringes 1 wird zunächst ein planer Trägerring 2 aus Metall zugeschnitten.

Im nächsten Verfahrensschritt wird auf den planen Trägerring auf zumindestens einer seiner beiden Seiten eine plastische Zwischenschicht 3 aufgebracht, die in der Figur schraffiert dargestellt ist.

Auf diese plastisch verformbare Zwischenschicht wird sodann ein organischer Reibbelag 4 aufgebracht, der in der Zeichnung tiefschwarz verdeutlicht ist.

Im letzten Verfahrensschritt wird der so vorbereitete plane Trägerring in eine konische Form umgeformt. Der Trägerring 1 weist im Beispielsfalle zwei Reibbeläge 4 und 5 an seiner Außen- bzw. Innenfläche auf. Wie eingangs erläutert, ist es jedoch auch möglich, lediglich eine Fläche des Trägerringes 2 mit einer Zwischenschicht und einem Reibbelag zu versehen. Dies kann sowohl entweder die innere als auch die äußere Seite des planen Ringes 2 sein.

### Bezugszeichenliste

- 1: Konusring
- 2: Trägerring
- 3: Zwischenschicht
- 4, 5: Reibbelag
- 6: Lappen am Außendurchmesser des Trägerrings 2 (im Beispielsfalle sechs derartiger Lappen)

## Patentansprüche

1. Verfahren zur Herstellung eines Konusringes (1) mit folgenden Verfahrensschritten:
- Zuschneiden eines planen Trägerringes (2) aus Metall;
- Aufbringen einer plastisch verformbaren Zwischenschicht (3);
- Aufbringen eines organischen Reibbelages (4, 5) auf die Zwischenschicht; und
- Umformen des mit der Zwischenschicht (3) und dem Reibbelag (4, 5) versehenen planen Trägerrings (2) in eine konische Form.

2. Verfahren nach Anspruch 1, **dadurch gekennzeichnet, dass** der Verfahrensschritt des Zuschneidens durch Stanzen durchgeführt wird.

3. Verfahren nach Anspruch 1 oder 2, **dadurch gekennzeichnet, dass** der Reibbelag zum Aufbringen auf die plane Fläche des Trägerringes auf die Zwischenschicht aufgeklebt wird.

4. Verfahren nach einem der Ansprüche 1 bis 3, **dadurch gekennzeichnet, dass** als Reibbelag ein glatter Reibbelag verwendet wird.

5. Verfahren nach einem der Ansprüche 1 bis 4, **dadurch gekennzeichnet, dass** die Zwischenschicht durch Aufspritzen aufgebracht wird.

6. Verfahren nach einem der Ansprüche 1 bis 5, **dadurch gekennzeichnet, dass** die Oberfläche der Zwischenschicht durch Strahlen aufgeraut wird.

7. Verfahren nach einem der Ansprüche 1 bis 6, **dadurch gekennzeichnet, dass** in der Fläche der Zwischenschicht durch einen Prägevorgang Riefen oder Nuten eingebracht werden.

8. Verfahren nach einem der Ansprüche 1 bis 7, **dadurch gekennzeichnet, dass** die Oberfläche der Zwischenschicht durch spanende Bearbeitung aufgeraut wird.

9. Konusring mit einem Trägerring, der zumindest eine mit einem organischen Reibbelag zu versehende Trägerfläche aufweist, herstellbar durch ein Verfahren gemäß einem der Ansprüche 1 bis 8.
